# EUROPEAN PATENT APPLICATION

(11) **EP 3 702 938 A1**
(43) Date of publication of application: **02.09.2020**
(21) Application number: 20159594.9
(22) Date of filing: 26.02.2020
(51) Int. Cl.: G06F 16/335

(54) **ELECTRONIC DEVICE AND METHOD FOR OBTAINING CONTENT INFORMATION BASED ON CONNECTED EXTERNAL DEVICE**

(30) Priority: 27.02.2019 KR 20190023432
(71) Applicant: Samsung Electronics Co., Ltd., Gyeonggi-do 16677 (KR)
(72) Inventor: LEE, Seunghwan, 16677, Gyeonggi-do (KR); KO, Changseog, 16677 Gyeonggi-do (KR); BYUN, Jieun, 16677 Gyeonggi-do (KR); YANG, Sulhee, 16677 Gyeonggi-do (KR); YOON, Yeori, 16677 Gyeonggi-do (KR); JULIEN, Jae, 16677 Gyeonggi-do (KR); CHO, Bonghyun, 16677 Gyeonggi-do (KR); HYEON, Sugyeong, 16677 Gyeonggi-do (KR)
(74) Representative: Taor, Simon Edward William

(57) **Abstract**

An electronic device includes an input/output interface, a communication circuit, and a processor operatively connected to the input/output interface and the communication circuit. The processor obtains at least one item of information associated with at least one first external device from the at least one first external device connected to the electronic device through the input/output interface or the communication circuit. The processor generates and stores a user profile including the at least one item of information, extracts at least one keyword associated with the at least one first external device from the user profile, transmits the at least one keyword to at least one second external device through the communication circuit, and receives at least one recommendation content information corresponding to the at least one keyword from the at least one second external device through the communication circuit.

## Description

### [Technical Field]

The disclosure relates to a method for recommending contents and an electronic device supporting the same.

### [Background Art]

As the distribution of electronic devices equipped with independent operating systems spreads, the electronic devices provide functions or services for user convenience or interaction with users. For example, the electronic devices provide various contents by building the multimedia platform with an external device. Furthermore, the electronic devices provide a recommendation service and a purchase (or download) service of contents corresponding to user preferences.

The above information is presented as background information only to assist with an understanding of the disclosure. No determination has been made, and no assertion is made, as to whether any of the above might be applicable as prior art with regard to the disclosure.

### [Disclosure]

### [Technical Problem]

The content recommendation of an electronic device has been dependent on a method of determining the user preference based on a history in which a user watches contents, a history in which a user searches for contents, or a history in which a user purchases contents and then of recommending contents associated with the user's preference. That is, the content recommendation of the electronic device has been limited in a method that is based on user activity, such as viewing, searching for, or purchasing contents, and thus the scenario for recommending various contents is required.

Aspects of the disclosure are to address at least the above-mentioned problems and/or disadvantages and to provide at least the advantages described below. Accordingly, an aspect of the disclosure is to provide a method for recommending contents that recommends contents by using at least a piece of information associated with an external device connected to an electronic device and the electronic device supporting the same.

### [Technical Solution]

In accordance with an aspect of the disclosure, an electronic device may include an input/output interface, a communication circuit, and a processor operatively connected to the input/output interface and the communication circuit.

In accordance with another aspect of the disclosure, the processor may obtain at least one information associated with at least one first external device from the at least one first external device connected to the electronic device through the input/output interface or the communication circuit, may generate a user profile including the at least one information, may extract at least one keyword associated with the at least one first external device from the user profile, may transmit the at least one keyword to at least one second external device through the communication circuit, and may receive at least one recommendation content information corresponding to the at least one keyword from the at least one second external device through the communication circuit.

In accordance with another aspect of the disclosure, a content recommendation method of an electronic device may include obtaining at least one information associated with at least one first external device from the at least one first external device connected to the electronic device through an input/output interface of the electronic device or a communication circuit the electronic device, generating a user profile including at least part of the at least one information, extracting at least one keyword associated with the at least one first external device from the user profile, transmitting the at least one keyword to at least one second external device through the communication circuit, and receiving at least one recommendation content information corresponding to the at least one keyword from the at least one second external device through the communication circuit.

### [Advantageous Effects]

According to various embodiments, a scenario for recommending contents may be provided in consideration of an external device interacting with an electronic device.

Besides, a variety of effects directly or indirectly understood through the disclosure may be provided.

Other aspects, advantages, and salient features of the disclosure will become apparent to those skilled in the art from the following detailed description, which, taken in conjunction with the annexed drawings, discloses various embodiments of the disclosure.

### [Description of Drawings]

The above and other aspects, features, and advantages of certain embodiments of the disclosure will be more apparent from the following description taken in conjunction with the accompanying drawings, in which:
FIG. 1 is a view illustrating a first example of an operation of an electronic device, according to an embodiment;
FIG. 2 is a view illustrating a second example of an operation of an electronic device, according to an embodiment;
FIG. 3 is a view illustrating a third example of an operation of an electronic device, according to an embodiment;
FIG. 4 is a view illustrating a configuration of an electronic device according to an embodiment;
FIG. 5 is a view illustrating an operation process associated with content recommendation of an electronic device, according to an embodiment;
FIG. 6 is a diagram illustrating a form of content recommendation of an electronic device, according to an embodiment;
FIG. 7 is a diagram illustrating a form of providing content information of an electronic device according to an embodiment;
FIG. 8 is a diagram illustrating a form of releasing content recommendation of an electronic device, according to an embodiment;
FIG. 9 is a view illustrating a content recommendation method of an electronic device according to an embodiment; and
FIG. 10 is a diagram illustrating an electronic device in a network environment, according to an embodiment.

### [Best Mode]

Hereinafter, various embodiments of the disclosure may be described with reference to the accompanying drawings. Accordingly, those of ordinary skill in the art will recognize that modification, equivalent, and/or alternative on the various embodiments described herein can be variously made without departing from the scope of the disclosure.

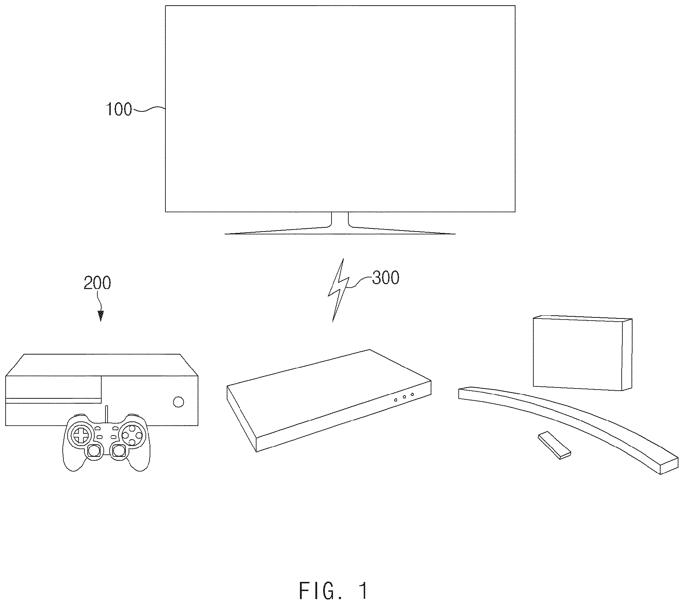

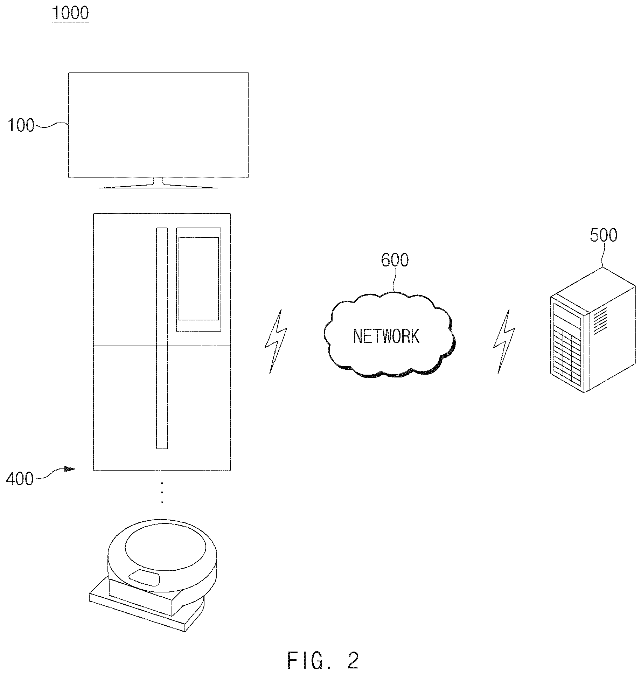

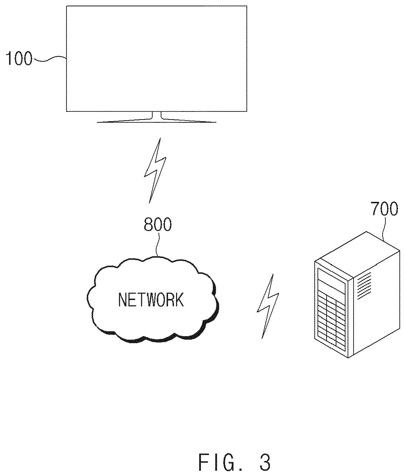

FIG. 1 is a view illustrating a first example of an operation of an electronic device, according to an embodiment. FIG. 2 is a view illustrating a second example of an operation of an electronic device, according to an embodiment. FIG. 3 is a view illustrating a third example of an operation of an electronic device, according to an embodiment.

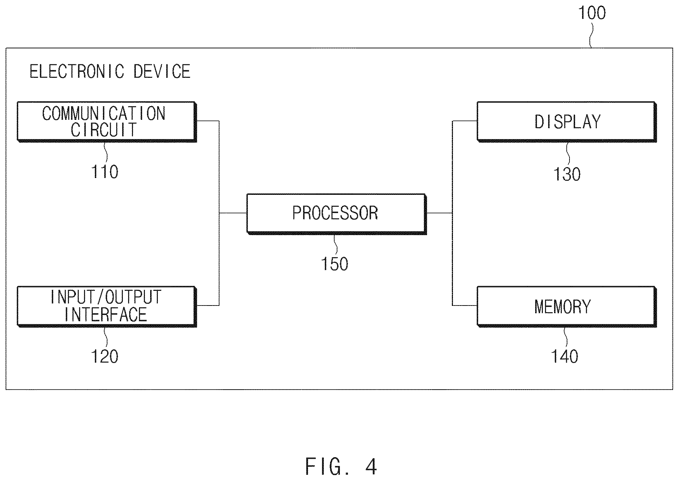

Referring to FIG. 1, an electronic device 100 according to an embodiment may interact with at least one first external device 200 (e.g., a DVD player, a BD player, a game console device, a smartphone, a sound output device, or the like). For example, the electronic device 100 may be connected to the at least one first external device 200, by wire or over a first network 300 (e.g., a short range wireless communication network). Alternatively, the electronic device 100 may be connected to the at least one first external device 200 through a specified relay device (e.g. a docking station or the like) by wire. According to an embodiment, the electronic device 100 may receive content data from the at least one first external device 200 and may output contents through the display or speaker included in the electronic device 100. Alternatively, the electronic device 100 may transmit at least a piece of content data stored therein (e.g., a memory 140 of FIG. 4) to the at least one first external device 200 such that the at least one first external device 200 outputs contents. According to an embodiment, the electronic device 100 may be referred to as a "display device".

Referring to FIG. 2, the electronic device 100 may interact with a first external device 400 in another aspect. For example, the electronic device 100 may be connected over a second network 600 (e.g., a long range wireless communication) to the at least one first external device 400 (e.g., a refrigerator, an air conditioner, a robotic vacuum, a sensing device, or the like), which becomes the target of IoT technology-based service, and the cloud 500 (or may be referred to as a 'cloud server') that collectively manages at least one first external device 400, and thus may establish an IoT environment 1000. In this regard, the electronic device 100 may function as an interface that supports the centralized monitoring or control of the at least one first external device 400.

Referring to FIG. 3, the electronic device 100 may interact with at least one second external device 700 (e.g., a contents provider server). For example, the electronic device 100 may establish a third network 800 (e.g., a long range wireless communication network) with the at least one second external device 700 and may receive recommendation content information from the at least one second external device 700 over the third network 800. Alternatively, the electronic device 100 may download (or stream) content data corresponding to the recommendation content information from at least one second external device 700 over the third network 800. According to various embodiments, the at least one second external device 700 may include a plurality of servers; the categories, types, or attributes of recommendation content information (or content data corresponding to recommendation content information) provided by the plurality of servers may be different from each other. For example, the first server and second server included in the at least one second external device 700 may provide pieces of recommendation content information associated with games and movies, respectively. Alternatively, the at least one second external device 700 may include a single server that collectively provides recommendation content information of various aspects (or content data corresponding to the recommendation content information).

According to an embodiment, the electronic device 100 may collect at least one information associated with the at least one first external device (200 in FIG. 1 and/or 400 in FIG. 2) to generate a user profile and may make a request for the recommendation of contents to the at least one second external device 700 of FIG. 3, using at least one keyword extracted from the user profile. The electronic device 100 may receive recommendation content information from the at least one second external device 700 and may display the recommendation content information through a specified user interface, in response to the request. Hereinafter, various embodiments associated with content recommendation of the electronic device 100 will be described.

FIG. 4 is a view illustrating a configuration of the electronic device 100 according to an embodiment.

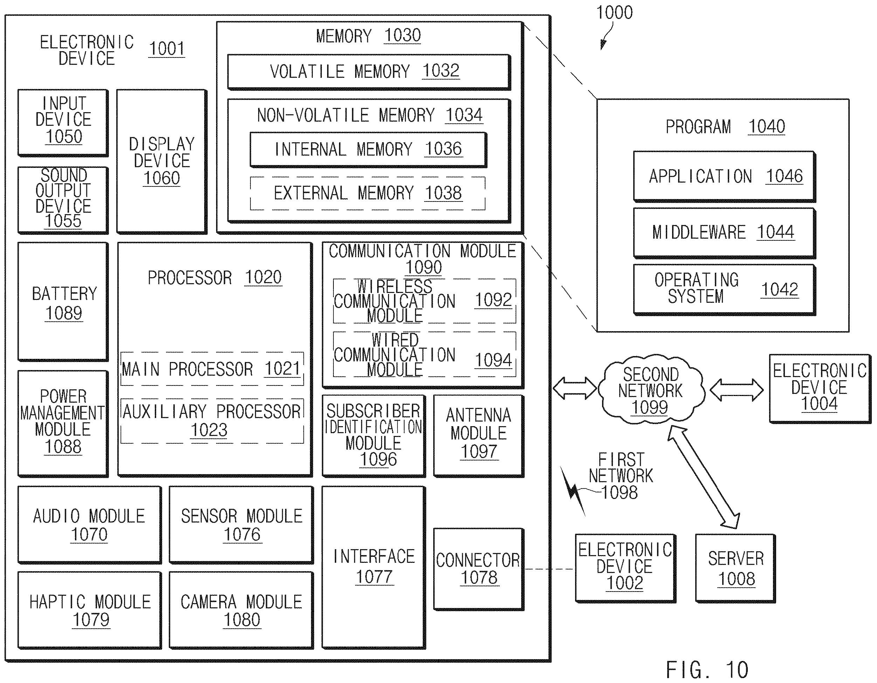

Referring to FIG. 4, the electronic device 100 according to an embodiment may include a communication circuit 110, an input/output interface 120, a display 130, the memory 140, and a processor 150. In various embodiments, the electronic device 100 may omit at least one of the above-described components or may further include another component. For example, the electronic device 100 may further include at least one speaker for outputting voice data associated with contents played on the electronic device 100. Alternatively, the electronic device 100 may further include at least part of the components of the electronic device 1001 to be described with reference to FIG. 10.

The communication circuit 110 may support communication between the electronic device 100 and at least one external device (e.g., the at least one first external device 200 and/or 400 of FIG. 1 and/or 2, the cloud 500 of FIG. 2, or the at least one second external device 700 of FIG. 3). For example, the communication circuit 110 may establish a wired or wireless communication with the at least one external device in accordance with a prescribed protocol and may access a specified network (e.g., the first network 300 of FIG. 1, the second network 600 of FIG. 2, or the third network 800 of FIG. 3) through the wired communication or wireless communication, and thus may support transmission or reception of data or signals with at least one external device.

The input/output interface 120 may support the transmission of data or signals based on the physical connection between the electronic device 100 and the at least one external device. For example, the input/output interface 120 may transmit, to at least some components of the electronic device 100, data or signals input from at least one external device physically connected to the electronic device 100. Alternatively, the input/output interface 120 may output data or signals provided from at least some components of the electronic device 100 to at least one external device physically connected to the electronic device 100. According to an embodiment, the input/output interface 120 may include a connector (e.g., a high definition multimedia interface (HDMI) connector or a universal serial bus (USB) connector, or the like) that supports a physical connection between the electronic device 100 and at least one external device.

The display 130 may output various contents by processing an image driving signal corresponding to the image information. For example, the display 130 may output contents, which are stored in the electronic device 100 or are provided from the at least one external device. In an embodiment, the display 130 may output a specified user interface. For example, the user interface may be output depending on the user control for a specific menu (e.g., a content recommendation menu) provided by the electronic device 100 (or provided by a controller linked with the electronic device 100) and may include recommendation content information received from at least one external device (e.g., the at least one second external device 700). According to various embodiments, the display 130 may be implemented as a touch screen display including a touch panel. For example, the touch panel may detect a signal of a user input to the display 130 through an internal structure such as a capacitive type, a pressure-sensitive type, a resistive type, or the like and may convert the detected signal into an electrical signal to transmit the detected signal to the processor 150.

The memory 140 may store at least one signal or data associated with the operation of the electronic device 100 or may store at least one instruction associated with the functional operations of components of the electronic device 100. For example, the memory 140 may store at least one content input in the preloaded form when the electronic device 100 is manufactured or may store at least one content downloaded (or streamed) from at least one external device (e.g., the at least one second external device 700. Alternatively, the memory 140 may store at least one application program that supports the playback of the at least one content.

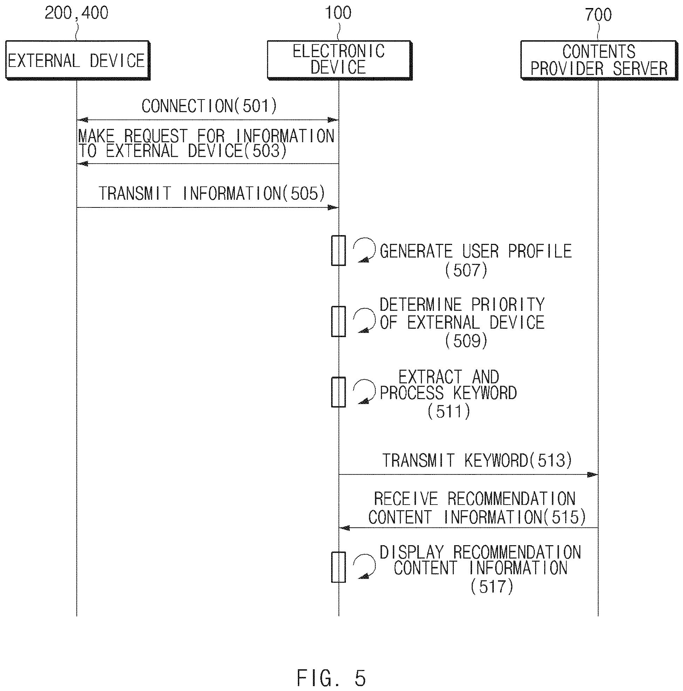

The processor 150 may be implemented with at least one of a central processing unit, an application processor, or a communication processor and may control the components of the above-described electronic device 100. For example, the processor 150 may be electrically or operatively connected to the components of the electronic device 100 to deliver at least one command associated with a functional operation to the components or to perform various arithmetic operations, data processing, or the like. In an embodiment, the processor 150 may perform a series of processes with regard to the content recommendation of the electronic device 100. For example, the processor 150 may collect at least one information about at least one first external device 200 and/or 400 connected to the electronic device 100 to generate a user profile and may extract at least one keyword selected depending on whether a specified condition is satisfied, on the user profile. The processor 150 may receive at least one recommendation content information corresponding to at least one keyword from the at least one second external device 700 by providing the extracted at least one keyword to the at least one second external device 700. Hereinafter, the operations of the processor 150 associated with the content recommendation of the electronic device 100 will be described with reference to FIG. 5.

FIG. 5 is a view illustrating an operation process associated with content recommendation of an electronic device, according to an embodiment.

Referring to FIG. 5, in operation 501, the electronic device 100 may be connected to at least one external device (e.g., the at least one first external device 200 of FIG. 1 and/or at least one first external device 400 of FIG. 2). For example, the electronic device 100 may be connected to the at least one external device 200 and/or 400 through the input/output interface 120 of FIG. 4 or a specified relay device (e.g., a docking station or the like) in wired communication. Alternatively, the electronic device 100 may be wirelessly connected to the at least one external device 200 and/or 400 through the communication circuit 110 of FIG. 4. In various embodiments, the event that the electronic device 100 is connected to the at least one external device 200 and/or 400 may mean that the electronic device 100 is operatively connected to monitor and control the at least one external device 200 and/or 400 or to play contents via the at least one external device 200 and/or 400 as well as being connected in the communication manner.

In operation 503 and operation 505, the processor 150 of FIG. 4 of the electronic device 100 may collect at least one item of information about at least one external device 200 and/or 400 connected to the electronic device 100. For example, the processor 150 may make a request for information associated with the corresponding external device to the at least one external device 200 and/or 400 and may receive information transmitted by the at least one external device 200 and/or 400 in response to the request.

According to an embodiment, the at least one item of information may be a concept including a variety of information associated with the at least one external device 200 and/or 400. For example, the processor 150 may collect the identification information of the at least one external device 200 and/or 400, as at least part of the at least one information. For example, the identification information may include at least one of model information (e.g., a model type, a model name, manufacturer information, information about date of manufacture, or the like) of the at least one external device 200 and/or 400, location information of the at least one external device 200 and/or 400, operating system information of the at least one external device 200 and/or 400, and connection history information (e.g., information about whether initial connection is made, connection time information, cumulative connection time information, cumulative connection count information, or the like) with the electronic device 100. Alternatively, the processor 150 may collect content information, which is provided from the at least one external device 200 and then is played through the electronic device 100 or is provided from the electronic device 100 and then is played through the at least one external device 200, as at least part of the at least one information. For example, the content information may include at least one of attribute information (e.g., meta data including genre information, title information, plot information, character information, or production date information of contents, or the like), play time information, cumulative play time information, and cumulative play count information of contents. Alternatively, the processor 150 may collect the state information of the at least one external device 400, as at least part of the at least one information. For example, the state information may include at least one of operation information (e.g. function information being executed, power ON/OFF information, or the like), object information (e.g., food material information stored in the external device 400 or expiration date information of food material being stored in the external device 400 in the case where the external device 400 is a refrigerator), and event information (e.g., error information, part exchange notification information, or the like) of the at least one external device 400. According to various embodiments, in addition to collecting at least one item of information through the request to the at least one external device 200 and/or 400, the processor 150 may collect at least part of the above-described at least one information with reference to log information recorded in the electronic device 100 (or the memory 140 of the electronic device 100 in FIG. 4). For example, when connecting the electronic device 100 to the at least one external device 200 and/or 400, when transmitting and receiving content data between the electronic device 100 and the at least one external device 200 and/or 400, or when the electronic device 100 monitors or controls the at least one external device 200 and/or 400, the processor 150 may accumulatively manage pieces of recorded information for each related external device and may collect the at least one information from pieces of accumulated information. Alternatively, in an operation of connecting between the electronic device 100 and the at least one external device 200 and/or 400, the processor 150 may collect at least part of the above-described at least one information based on the auto detection function of the electronic device 100.

In operation 507, the processor 150 may generate a user profile based on at least one information collected for the at least one external device 200 and/or 400. For example, the processor 150 may generate a user profile including at least one information corresponding to the at least one external device 200 and/or 400 in a table form to store the user profile in the memory 140. According to various embodiments, the processor 150 may detect at least one external device newly connected to the electronic device 100 or the at least one external device 200 and/or 400, which is disconnected from the electronic device 100 and may update the user profile based on the detection result, in real time or at a specified period.

In operation 509, the processor 150 may determine the priority of the at least one external device 200 and/or 400 connected to the electronic device 100, based on the generated user profile. According to an embodiment, the priority determined for the at least one external device 200 and/or 400 may be referred to as "user preference information" about the at least one external device 200 and/or 400.

In an embodiment, the processor 150 may learn at least one information corresponding to the at least one external device 200 and/or 400 included in the user profile, with regard to the priority determination. The processor 150 may select the at least one external device 200 and/or 400 of which the relative ranking for the interaction with the electronic device 100 is included within a specified threshold ranking range, based on the at least one information learning. For example, with respect to the at least one external device 200 and/or 400, the processor 150 may determine at least one of the ranking for cumulative connection time with the electronic device 100, the ranking for cumulative connection count with the electronic device 100, the ranking of content cumulative play time through the interaction (e.g., the transmission of content data) with the electronic device 100, and the ranking of content cumulative play count through the interaction with the electronic device 100. In an embodiment, the processor 150 may determine the priority in consideration of a ranking for at least one element (e.g., cumulative connection time, cumulative connection count, content cumulative play time, and/or content cumulative play count) of the at least one external device 200 and/or 400 and may select the at least one external device 200 and/or 400 included in the threshold ranking range.

In various embodiments, when at least one event information (e.g., error information, part exchange notification information, or the like) is present on at least one information included in the user profile, the processor 150 may determine that at least one external device 200 and/or 400 associated with at least one event information is included in the threshold ranking range, regardless of the priority determination. In this case, the processor 150 may exclude the ranking variations for the at least one external device 200 and/or 400 selected as being included in the threshold ranking range. In other words, the selected at least one external device 200 and/or 400 may remain within the threshold ranking range, and the at least one external device 200 and/or 400 corresponding to the event information may be considered as being within the threshold ranking range. According to various embodiments, the priority determination for the at least one external device 200 and/or 400 is not limited to the above description, and may be determined based on the combination of various usage information included in a user profile.

In operation 511, the processor 150 may extract and process at least one keyword from a user profile. For example, the processor 150 may extract at least one keyword on at least one information corresponding to at least one external device 200 and/or 400 selected (or considered) as a priority within the threshold ranking range. According to an embodiment, the processor 150 may extract at least one keyword from at least one of model information (e.g., a model type, a model name, manufacturer information, information about date of manufacture, or the like) of the selected at least one external device 200, content information (e.g., genre information, title information, plot information, character information, or production date information of contents, or the like) played through the interaction with the electronic device 100, information about whether the electronic device 100 is first connected, information about food materials being stored, error information, and part exchange notification information.

In an embodiment, the processor 150 may process the extracted at least one keyword. For example, the processor 150 may combine at least one keyword extracted from at least one information corresponding to an external device with at least one keyword extracted from at least one information corresponding to another external device. Alternatively, the processor 150 may extend the at least one keyword by adding the related word to the extracted at least one keyword. In this regard, the processor 150 may collect at least one keyword, which is extracted by another electronic device from at least one contents provider server (e.g., the at least one second external device 700 in FIG. 3) or at least one arbitrary keyword to build a database in the memory 140. According to various embodiments, the processor 150 may exclude separate processing for the extracted at least one keyword.

In operation 513, the processor 150 may transmit the extracted (or processed) at least one keyword to the at least one contents provider server 700. For example, the processor 150 may transmit the corresponding keyword to the contents provider server corresponding to the extracted keyword. For example, when the extracted at least one keyword corresponds to a DVD player and a refrigerator, the processor 150 may transmit the DVD player keyword to the contents provider server that treats the contents associated with the DVD player and may transmit a refrigerator keyword to the contents provider server that treats the contents associated with the refrigerator. Alternatively, when the at least one contents provider server 700 is a single server that collectively treats various aspects of contents, the processor 150 may transmit the extracted at least one keyword to the contents provider server of the single server.

In operation 515, the processor 150 may receive recommendation content information from the at least one contents provider server 700. For example, the processor 150 may receive at least one recommendation content information indicating contents (e.g., new game trailer information, movie information, drama information, music information, food recipe information, device utilization information, device self-repair information, part self-exchange information, or the like) associated with the at least one keyword. According to an embodiment, the electronic device 100 may receive the recommendation content information in the form of a thumbnail image; the thumbnail image may include link information of a website providing product information (e.g., product manufacturer information, product seller information, product price information, or the like) associated with the corresponding recommendation content information.

In operation 517, the processor 150 may display at least one recommendation content information received from the at least one contents provider server 700 on a specified user interface. For example, when a user input to a specific menu (e.g., content recommendation menu) provided by the electronic device 100 or a controller (a remote control) linked with the electronic device 100 occurs, the processor 150 may output a user interface including at least one recommendation content information to the display 130 of FIG. 4 in response to the user input.

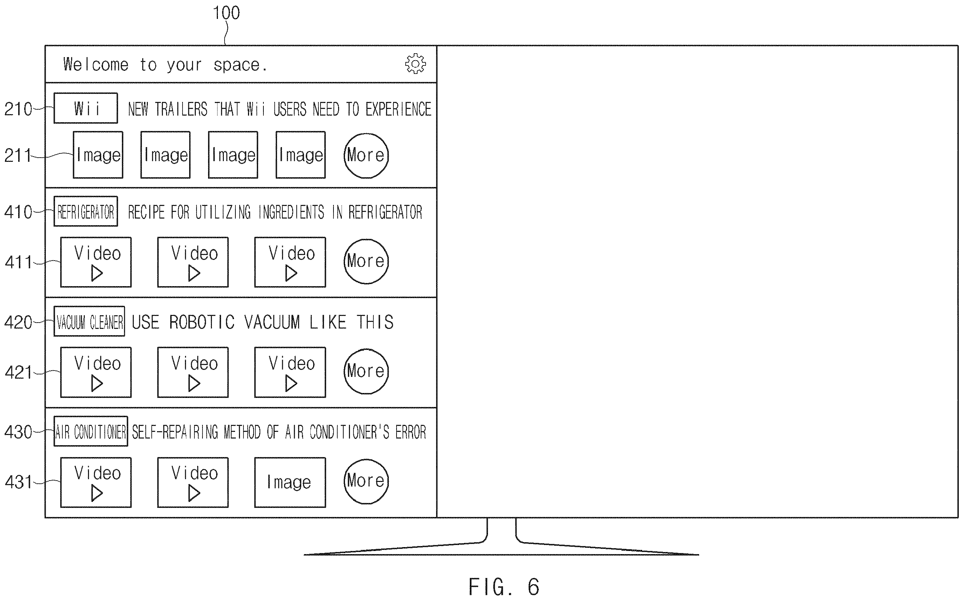

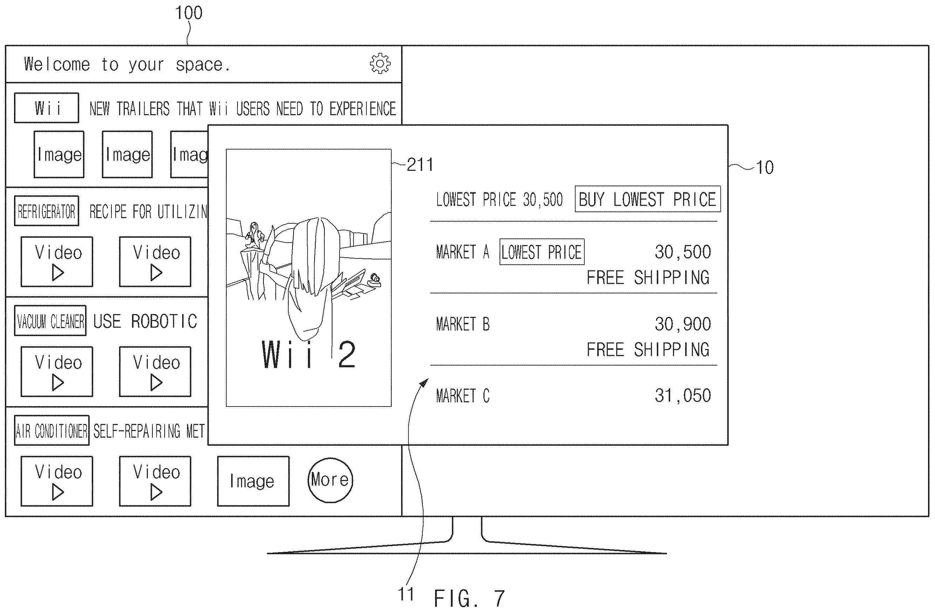

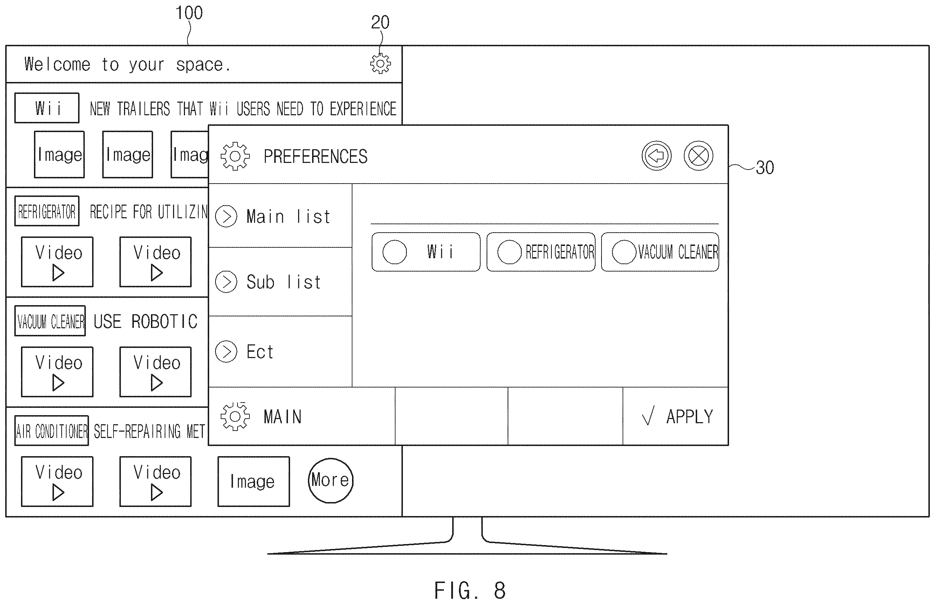

FIG. 6 is a diagram illustrating a form of content recommendation of an electronic device, according to an embodiment. FIG. 7 is a diagram illustrating a form of providing content information of an electronic device according to an embodiment. FIG. 8 is a diagram illustrating a form of releasing content recommendation of an electronic device, according to an embodiment.

Referring to FIG. 6, the processor (150 of FIG. 4) of the electronic device 100 may output a specified user interface 131 to at least one region of the display 130 in response to a user input for a menu (e.g., a content recommendation menu), which is displayed via the display 130 of FIG. 4 or provided as a hardware button to a controller (remote control) (not illustrated) that interacts with the electronic device 100. According to an embodiment, the processor 150 may display at least one recommendation content information received from at least one contents provider server (e.g., the at least one second external device 700 of FIG. 3) on the user interface 131. In this regard, the processor 150 may sequentially display identification information 210, 410, 420, and/or 430 (e.g., a model name) of at least one external device, which is selected (or considered) as the priority within the threshold ranking range, to the user interface 131 depending on the priority. For example, the processor 150 may divide the user interface 131 into regions corresponding to the number of the threshold rankings and may sequentially display the identification information 210, 410, 420, and/or 430 of at least one external device in each of the divided regions depending on the priority. According to various embodiments, the divided region may be a region that is visually specified through the line or a virtual region that is not visually specified. In various embodiments, the user interface 131 may include a scrolling function that is movable vertically or horizontally depending on the resolution of the display 130 and the number of divided regions.

In an embodiment, the processor 150 may display the at least one recommendation content information 211, 411, 421, and/or 431 received from the at least one contents provider server 700 in the lower region of the identification information of the corresponding external device. For example, the processor 150 may display the identification information 210 of the external device (e.g., Wii) selected as the highest priority within the threshold ranking range, in the top end region formed in the user interface 131 and may arrange and display at least one recommendation content information 211 corresponding to the external device (e.g., Wii) of the highest priority in at least one recommendation content information received from the at least one contents provider server 700, in the lower region of the identification information 210 within the top end region.

In another embodiment, the processor 150 may generate at least one folder corresponding to at least one external device selected as a priority within a threshold ranking range and may sequentially display the generated at least one folder on the user interface 131 in the order according to the priority. In various embodiments, the at least one folder may be sequentially displayed in each of the divided regions with respect to the user interface 131. Alternatively, when the at least one folder is generated, the region division for the user interface 131 may be excluded, and the at least one folder may be sequentially displayed in the vertical direction or the horizontal direction with respect to the display 130. According to an embodiment, the processor 150 may display the identification information (e.g., model name) of the corresponding external device as the folder name with respect to the at least one folder and may include at least one recommendation content information received from the at least one contents provider server 700 in a folder of the corresponding external device. In this case, when user input to an arbitrary folder occurs, at least one recommendation content information may be displayed depending on the entrance to the corresponding folder.

In an embodiment, when the processor 150 receives a first user input (e.g., a touch input, a click input, or the like) to one of the at least one recommendation content information 211, 411, 421, and/or 431 displayed through the user interface 131, the processor 150 may enlarge and display recommendation content information in the form of the corresponding thumbnail image. Alternatively, when the processor 150 receives a first user input to the at least one recommendation content information 211, 411, 421, and/or 431, the processor 150 may access the contents provider server providing the recommendation content information in the form of the corresponding thumbnail image and may download (or stream) and play image content data corresponding to the corresponding recommendation content information. According to an embodiment, the processor 150 may update the user profile with reference to the external device associated with recommendation content information, in which the first user input occurs, as user preference information.

Referring to FIG. 7, when the processor 150 receives a second user input (e.g., a long press input, a double click input, or the like) to one of the at least one recommendation content information 211, 411, 421, and/or 431 displayed on the user interface 131, the processor 150 may access the related website based on link information included in the corresponding recommendation content information and may output a first pop-up window 10 including the screen of the website. According to an embodiment, the screen within the first pop-up window 10 may include the recommendation content information 211 in the form of a thumbnail image, in which the second user input occurs, and product information 11 (e.g., product manufacturer information, product seller information, product price information, or the like) associated with the recommendation content information 211.

Referring to FIG. 8, the processor 150 may exclude the display of at least part of at least one recommendation content information received from at least one contents provider server 700. In this regard, when the processor 150 receives a user input to an object 20 (e.g., setting icon, or the like) displayed in one region of the user interface 131, the processor 150 may output a second pop-up window 30 capable of setting whether at least one recommendation content information for at least one external device (200 of FIG. 1 and/or 400 of FIG. 2) connected to the electronic device 100 is displayed (or whether at least one recommendation content information is received from at least one contents provider server 700). According to an embodiment, the screen within the second pop-up window 30 may include a first category for providing identification information (e.g., a model name) for at least one external device selected as a priority within a threshold ranking and a second category for providing identification information (e.g., a model name) for at least one external device connected to the electronic device 100 other than the selected at least one external device.

In an embodiment, the processor 150 may display only the at least one recommendation content information associated with at least one identification information selected by a user input among at least one identification information provided by the first category, on the user interface 131. Alternatively, when at least one identification information is selected by the user input among at least one identification information provided by the second category, the processor 150 may receive at least one recommendation content information associated with the selected at least one identification information, from at least one contents provider server 700 to display the at least one recommendation content information on the user interface 131, regardless of the priority within the threshold ranking. According to an embodiment, the processor 150 may update a user profile with reference to the external device associated with the identification information selected from a user through the second pop-up window 30 as user preference information.

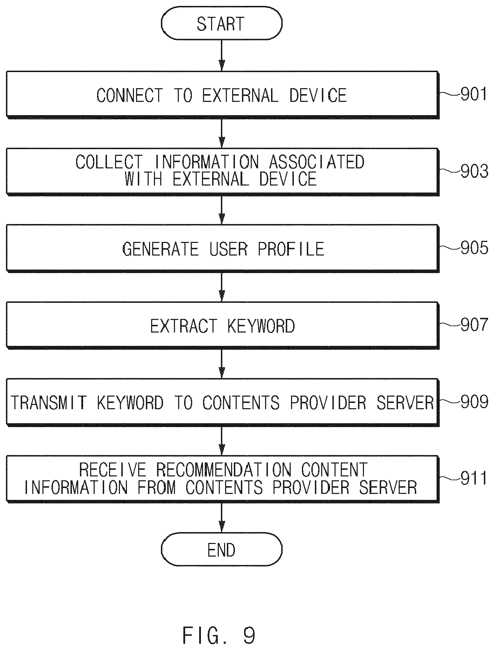

FIG. 9 is a view illustrating a content recommendation method of an electronic device according to an embodiment. The following operations may be at least partly similar to or may correspond to the operations described above with reference to FIG. 5, and the redundant descriptions may be omitted.

Referring to FIG. 9, in operation 901, the electronic device 100 of FIG. 1, 2, 3, 4, 5, 6, 7, or 8 may be connected to at least one external device (200 of FIG. 1 and/or 400 of FIG. 2). For example, the electronic device 100 may be connected to the at least one external device 200 and/or 400 through the input/output interface 120 of FIG. 4 or a specified relay device (e.g., a docking station or the like) in wired communication. Alternatively, the electronic device 100 may be wirelessly connected to the at least one external device 200 and/or 400 through the communication circuit 110 of FIG. 4.

In operation 903, the processor 150 of FIG. 4 of the electronic device 100 may collect at least one information about the at least one external device 200 and/or 400 connected to the electronic device 100. For example, the processor 150 may make a request for at least one information associated with the corresponding external device to the at least one external device 200 and/or 400 connected to the electronic device 100 to collect the at least one information. Alternatively, the processor 150 may collect at least part of the at least one information with reference to log information recorded in the electronic device 100. For example, when connecting the electronic device 100 to the at least one external device 200 and/or 400, when transmitting and receiving content data between the electronic device 100 and the at least one external device 200 and/or 400, or when the electronic device 100 monitors or controls the at least one external device 200 and/or 400, the processor 150 may accumulatively manage pieces of recorded information for each related external device and may collect the at least one information from pieces of accumulated information. Alternatively, in an operation of connecting between the electronic device 100 and the at least one external device 200 and/or 400, the processor 150 may collect at least part of the at least one information based on the auto detection function of the electronic device 100.

In an embodiment, the processor 150 may collect the identification information of at least one external device 200 and/or 400 including at least one of model information (e.g., a model type, a model name, manufacturer information, information about date of manufacture, or the like) of the at least one external device 200 and/or 400, location information of the at least one external device 200 and/or 400, operating system information of the at least one external device 200 and/or 400, and connection history information (e.g., information about whether initial connection is made, connection time information, cumulative connection time information, cumulative connection count information, or the like) with the electronic device 100, as at least part of the at least one information. Alternatively, the processor 150 may collect content information, which is provided from the at least one external device 200 and then is played through the electronic device 100 or is provided from the electronic device 100 and then is played through the at least one external device 200, as at least part of the at least one information. For example, the content information may include at least one of attribute information (e.g., meta data including genre information, title information, plot information, character information, or production date information of contents, or the like), play time information, cumulative play time information, and cumulative play count information of contents. Alternatively, the processor 150 may collect the state information of the at least one external device 200 and/or 400 including at least one of operation information (e.g. function information being executed, power ON/OFF information, or the like), object information (e.g., food material information being stored or expiration date information of food material being stored), and event information (e.g., error information, part exchange notification information, or the like) of the at least one external device 200 and/or 400, as at least part of the at least one information.

In operation 905, the processor 150 may generate a user profile. For example, the processor 150 may generate a user profile including at least one information collected for the at least one external device 200 and/or 400 in the form of a table.

In operation 907, the processor 150 may extract at least one keyword from the user profile. In an embodiment, the processor 150 may select at least one external device satisfying a specified condition among the at least one external device 200 and/or 400 and may extract the at least one keyword on at least one information corresponding to the selected at least one external device. For example, the processor 150 may extract the at least one keyword from at least one of model information (e.g., a model type, a model name, manufacturer information, information about date of manufacture, or the like) of the selected at least one external device, content information (e.g., genre information, title information, plot information, character information, or production date information of contents, or the like) played through the interaction with the electronic device 100, information about whether the electronic device 100 is first connected, information about food materials being stored, error information, and part exchange notification information. According to various embodiments, the specified condition may refer to a condition that a priority determined in consideration of a cumulative connection time with the electronic device 100, a cumulative connection count with the electronic device 100, a content cumulative play time through the interaction (e.g., the transmission of content data) with the electronic device 100, and/or ranking for each content cumulative play count through the interaction with the electronic device 100 is included in a specified threshold ranking range.

In operation 909, the processor 150 may transmit the extracted at least one keyword to the at least one contents provider server 700 of FIG. 3 or 5. For example, the processor 150 may transmit the extracted at least one keyword to a contents provider server corresponding to the corresponding keyword. Alternatively, when the at least one contents provider server 700 is a single server that collectively treats various aspects of contents, the processor 150 may transmit the extracted at least one keyword to the contents provider server of the single server. According to various embodiments, the processor 150 may process and transmit the extracted at least one keyword. For example, the processor 150 may combine the extracted at least one keyword or may add the related word to the extracted at least one keyword.

In operation 911, the processor 150 may receive at least one recommendation content information from the at least one contents provider server 700. For example, the processor 150 may receive at least one recommendation content information indicating contents (e.g., new game trailer information, movie information, drama information, music information, food recipe information, device utilization information, device self-repair information, part self-exchange information, or the like) associated with the at least one keyword, in the form of a thumbnail image. According to an embodiment, when receiving a user input to a specific menu (e.g., content recommendation menu) provided by the electronic device 100 or a controller (remote control) linked with the electronic device 100, the processor 150 may display at least one recommendation content information received from the at least one contents provider server 700 through a specified user interface.

An electronic device according to the above-described various embodiments may include an input/output interface, a communication circuit, and a processor operatively connected to the input/output interface and the communication circuit.

According to various embodiments, the processor may obtain at least one information associated with at least one first external device from the at least one first external device connected to the electronic device through the input/output interface or the communication circuit, may generate a user profile including the at least one information, may extract at least one keyword associated with the at least one first external device from the user profile, may transmit the at least one keyword to at least one second external device through the communication circuit, and may receive at least one recommendation content information corresponding to the at least one keyword from the at least one second external device through the communication circuit.

According to various embodiments, the processor may obtain at least one of model information of the at least one first external device, information about whether first connection to the electronic device is made, information about cumulative connection time with the electronic device, and information about a cumulative connection count with the electronic device, as at least part of the at least one information.

According to various embodiments, the processor may further obtain at least one of meta data, play time information, information about cumulative play time, and information about a cumulative play count for contents played based on connection between the electronic device and the at least one first external device, as the at least part of the at least one information.

According to various embodiments, the processor may further obtain at least one of object information included in the at least one first external device, error information of the at least one first external device, and exchange notification information of a part associated with the at least one first external device, as the at least part of the at least one information.

According to various embodiments, the processor may determine at least one of ranking for the cumulative connection time, ranking for the cumulative connection count, ranking for the cumulative play time, and ranking for the cumulative play count, with respect to the at least one first external device.

According to various embodiments, the processor may determine a priority for the at least one first external device in consideration of the determined at least one ranking and may select at least one first external device included in a specified threshold ranking range based on the priority.

According to various embodiments, when at least one of the error information and the exchange notification information of the part is included in the user profile, the processor may determine that at least one first external device associated with at least one of the error information and the exchange notification information of the part is included in the specified threshold ranking range.

According to various embodiments, the processor may extract the at least one keyword from at least one information corresponding to the at least one first external device selected or determined as being included in the specified threshold ranking range.

According to various embodiments, the electronic device may further include a display.

According to various embodiments, the processor may output a user interface including the at least one recommendation content information through the display.

According to various embodiments, the processor may display the model information of the at least one first external device selected or determined as being included in the specified threshold ranking range on the user interface depending on the priority and may display the at least one recommendation content information in a lower region of corresponding model information.

According to various embodiments, the processor may display at least one folder corresponding to the at least one first external device selected or determined as being included in the specified threshold ranking range, on the user interface depending on the priority and may cause the at least one recommendation content information to be included in a corresponding folder.

According to various embodiments, the processor may enlarge and display recommendation content information in response to a user input to the at least one recommendation content information or may download content data corresponding to the recommendation content information from the at least one second external device.

According to various embodiments, the at least one recommendation content information may include link information of a website providing information about a product associated with the at least one recommendation content information.

According to various embodiments, in response to a user input to the at least one recommendation content information, the processor may access the website based on the link information and may output a screen the website including at least one of manufacturer information of the product, seller information of the product, and price information of the product, to a first pop-up window, as at least part of the product information.

According to various embodiments, the processor may output a screen capable of setting whether to display the at least one recommendation content information, to a second pop-up window in response to a user input to an icon included in the user interface.

According to the above-described various embodiments, a content recommendation method of an electronic device may include obtaining at least one information associated with at least one first external device from the at least one first external device connected to the electronic device through an input/output interface of the electronic device or a communication circuit the electronic device, generating a user profile including at least part of the at least one information, extracting at least one keyword associated with the at least one first external device from the user profile, transmitting the at least one keyword to at least one second external device through the communication circuit, and receiving at least one recommendation content information corresponding to the at least one keyword from the at least one second external device through the communication circuit.

According to various embodiments, the obtaining of the at least one information may include obtaining at least one of model information of the at least one first external device, information about whether first connection to the electronic device is made, information about cumulative connection time with the electronic device, and information about a cumulative connection count with the electronic device and obtaining at least one of meta data, play time information, information about cumulative play time, and information about a cumulative play count for contents played based on connection between the electronic device and the at least one first external device.

According to various embodiments, the extracting of the at least one keyword may include determining at least one of ranking for the cumulative connection time, ranking for the cumulative connection count, ranking for the cumulative play time, and ranking for the cumulative play count, determining a priority for the at least one first external device in consideration of the determined at least one ranking and selecting at least one first external device included in a specified threshold ranking range based on the priority, and extracting the at least one keyword from at least one information corresponding to the at least one first external device selected as being included in the specified threshold ranking range.

According to various embodiments, the content recommendation method may further include outputting a user interface including the at least one recommendation content information through a display of the electronic device.

According to various embodiments, the outputting of the user interface may include displaying model information of the at least one first external device selected as being included in the specified threshold ranking range on the user interface depending on the priority and displaying the at least one recommendation content information in a lower region of corresponding model information and displaying at least one folder corresponding to the at least one first external device selected as being included in the specified threshold ranking range, on the user interface depending on the priority and causing the at least one recommendation content information to be included in a corresponding folder.

According to various embodiments, the content recommendation method may further include enlarging and displaying recommendation content information in response to a user input to the at least one recommendation content information and downloading content data corresponding to the recommendation content information from the at least one second external device, in response to the user input to the at least one recommendation content information.

According to various embodiments, the content recommendation method may further include at least one of outputting a screen including at least one manufacturer information of a product associated with recommendation content information, seller information of the product, and price information of the product to a first pop-up window, in response to the user input to the at least one recommendation content information and outputting a screen capable of setting whether to display the at least one recommendation content information, to a second pop-up window in response to a user input to an icon included in the user interface.

FIG. 10 is a diagram illustrating an electronic device in a network environment according to an embodiment.

Referring to FIG. 10, an electronic device 1001 may communicate with an electronic device 1002 through a first network 1098 (e.g., a short-range wireless communication network) or may communicate with an electronic device 1004 or a server 1008 through a second network 1099 (e.g., a long-distance wireless communication network) in a network environment 1000. According to an embodiment, the electronic device 1001 may communicate with the electronic device 1004 through the server 1008. According to an embodiment, the electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module 1096, or an antenna module 1097. According to some embodiments, at least one (e.g., the display device 1060 or the camera module 1080) among components of the electronic device 1001 may be omitted or one or more other components may be added to the electronic device 1001. According to some embodiments, some of the above components may be implemented with one integrated circuit. For example, the sensor module 1076 (e.g., a fingerprint sensor, an iris sensor, or an illuminance sensor) may be embedded in the display device 1060 (e.g., a display).

The processor 1020 may execute, for example, software (e.g., a program 1040) to control at least one of other components (e.g., a hardware or software component) of the electronic device 1001 connected to the processor 1020 and may process or compute a variety of data. According to an embodiment, as a part of data processing or operation, the processor 1020 may load a command set or data, which is received from other components (e.g., the sensor module 1076 or the communication module 1090), into a volatile memory 1032, may process the command or data loaded into the volatile memory 1032, and may store result data into a nonvolatile memory 1034. According to an embodiment, the processor 1020 may include a main processor 1021 (e.g., a central processing unit or an application processor) and an auxiliary processor 1023 (e.g., a graphic processing device, an image signal processor, a sensor hub processor, or a communication processor), which operates independently from the main processor 1021 or with the main processor 1021. Additionally or alternatively, the auxiliary processor 1023 may use less power than the main processor 1021, or is specified to a designated function. The auxiliary processor 1023 may be implemented separately from the main processor 1021 or as a part thereof.

The auxiliary processor 1023 may control, for example, at least some of functions or states associated with at least one component (e.g., the display device 1060, the sensor module 1076, or the communication module 1090) among the components of the electronic device 1001 instead of the main processor 1021 while the main processor 1021 is in an inactive (e.g., sleep) state or together with the main processor 1021 while the main processor 1021 is in an active (e.g., an application execution) state. According to an embodiment, the auxiliary processor 1023 (e.g., the image signal processor or the communication processor) may be implemented as a part of another component (e.g., the camera module 1080 or the communication module 1090) that is functionally related to the auxiliary processor 1023.

The memory 1030 may store a variety of data used by at least one component (e.g., the processor 1020 or the sensor module 1076) of the electronic device 1001. For example, data may include software (e.g., the program 1040) and input data or output data with respect to commands associated with the software. The memory 1030 may include the volatile memory 1032 or the nonvolatile memory 1034.

The program 1040 may be stored in the memory 1030 as software and may include, for example, an operating system 1042, a middleware 1044, or an application 1046.

The input device 1050 may receive a command or data, which is used for a component (e.g., the processor 1020) of the electronic device 1001, from an outside (e.g., a user) of the electronic device 1001. The input device 1050 may include, for example, a microphone, a mouse, a keyboard, or a digital pen (e.g., a stylus pen).

The sound output device 1055 may output a sound signal to the outside of the electronic device 1001. The sound output device 1055 may include, for example, a speaker or a receiver. The speaker may be used for general purposes, such as multimedia play or recordings play, and the receiver may be used for receiving calls. According to an embodiment, the receiver and the speaker may be either integrally or separately implemented.

The display device 1060 may visually provide information to the outside (e.g., the user) of the electronic device 1001. For example, the display device 1060 may include a display, a hologram device, or a projector and a control circuit for controlling a corresponding device. According to an embodiment, the display device 1060 may include a touch circuitry configured to sense the touch or a sensor circuit (e.g., a pressure sensor) for measuring an intensity of pressure on the touch.

The audio module 1070 may convert a sound and an electrical signal in dual directions. According to an embodiment, the audio module 1070 may obtain the sound through the input device 1050 or may output the sound through the sound output device 1055 or an external electronic device (e.g., the electronic device 1002 (e.g., a speaker or a headphone)) directly or wirelessly connected to the electronic device 1001.

The sensor module 1076 may generate an electrical signal or a data value corresponding to an operating state (e.g., power or temperature) inside or an environmental state (e.g., a user state) outside the electronic device 1001. According to an embodiment, the sensor module 1076 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 1077 may support one or more designated protocols to allow the electronic device 1001 to connect directly or wirelessly to the external electronic device (e.g., the electronic device 1002). According to an embodiment, the interface 1077 may include, for example, an HDMI (high-definition multimedia interface), a USB (universal serial bus) interface, an SD card interface, or an audio interface.

A connecting terminal 1078 may include a connector that physically connects the electronic device 1001 to the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal to a mechanical stimulation (e.g., vibration or movement) or an electrical stimulation perceived by the user through tactile or kinesthetic sensations. According to an embodiment, the haptic module 1079 may include, for example, a motor, a piezoelectric element, or an electric stimulator.

The camera module 1080 may shoot a still image or a video image. According to an embodiment, the camera module 1080 may include, for example, at least one or more lenses, image sensors, image signal processors, or flashes.

The power management module 1088 may manage power supplied to the electronic device 1001. According to an embodiment, the power management module 1088 may be implemented as at least a part of a power management integrated circuit (PMIC).

The battery 1089 may supply power to at least one component of the electronic device 1001. According to an embodiment, the battery 1089 may include, for example, a non-rechargeable (primary) battery, a rechargeable (secondary) battery, or a fuel cell.

The communication module 1090 may establish a direct (e.g., wired) or wireless communication channel between the electronic device 1001 and the external electronic device (e.g., the electronic device 1002, the electronic device 1004, or the server 1008) and support communication execution through the established communication channel. The communication module 1090 may include at least one communication processor operating independently from the processor 1020 (e.g., the application processor) and supporting the direct (e.g., wired) communication or the wireless communication. According to an embodiment, the communication module 1090 may include a wireless communication module 1092 (e.g., a cellular communication module, a short-range wireless communication module, or a GNSS (global navigation satellite system) communication module) or a wired communication module 1094 (e.g., an LAN (local area network) communication module or a power line communication module). The corresponding communication module among the above communication modules may communicate with the external electronic device through the first network 1098 (e.g., the short-range communication network such as a Bluetooth, a WiFi direct, or an IrDA (infrared data association)) or the second network 1099 (e.g., the long-distance wireless communication network such as a cellular network, an internet, or a computer network (e.g., LAN or WAN)). The above-mentioned various communication modules may be implemented into one component (e.g., a single chip) or into separate components (e.g., chips), respectively. The wireless communication module 1092 may identify and authenticate the electronic device 1001 using user information (e.g., international mobile subscriber identity (IMSI)) stored in the subscriber identification module 1096 in the communication network, such as the first network 1098 or the second network 1099.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., PCB). According to an embodiment, the antenna module 1097 may include a plurality of antennas. In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

At least some components among the components may be connected to each other through a communication method (e.g., a bus, a GPIO (general purpose input and output), an SPI (serial peripheral interface), or an MIPI (mobile industry processor interface)) used between peripheral devices to exchange signals (e.g., a command or data) with each other.

According to an embodiment, the command or data may be transmitted or received between the electronic device 1001 and the external electronic device 1004 through the server 1008 connected to the second network 1099. Each of the electronic devices 1002 and 1004 may be the same or different types as or from the electronic device 1001. According to an embodiment, all or some of the operations performed by the electronic device 1001 may be performed by one or more external electronic devices among the external electronic devices 1002, 1004, or 1008. For example, when the electronic device 1001 performs some functions or services automatically or by request from a user or another device, the electronic device 1001 may request one or more external electronic devices to perform at least some of the functions related to the functions or services, in addition to or instead of performing the functions or services by itself. The one or more external electronic devices receiving the request may carry out at least a part of the requested function or service or the additional function or service associated with the request and transmit the execution result to the electronic device 1001. The electronic device 1001 may provide the result as is or after additional processing as at least a part of the response to the request. To this end, for example, a cloud computing, distributed computing, or client-server computing technology may be used.

The electronic device according to various embodiments disclosed in the disclosure may be various types of devices. The electronic device may include, for example, a portable communication device (e.g., a smartphone), a computer device, a portable multimedia device, a mobile medical appliance, a camera, a wearable device, or a home appliance. The electronic device according to an embodiment of the disclosure should not be limited to the above-mentioned devices.

It should be understood that various embodiments of the disclosure and terms used in the embodiments do not intend to limit technical features disclosed in the disclosure to the particular embodiment disclosed herein; rather, the disclosure should be construed to cover various modifications, equivalents, or alternatives of embodiments of the disclosure. With regard to description of drawings, similar or related components may be assigned with similar reference numerals. As used herein, singular forms of noun corresponding to an item may include one or more items unless the context clearly indicates otherwise. In the disclosure disclosed herein, each of the expressions "A or B", "at least one of A and B", "at least one of A or B", "A, B, or C", "one or more of A, B, and C", or "one or more of A, B, or C", and the like used herein may include any and all combinations of one or more of the associated listed items. The expressions, such as "a first", "a second", "the first", or "the second", may be used merely for the purpose of distinguishing a component from the other components, but do not limit the corresponding components in other aspect (e.g., the importance or the order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

The term "module" used in the disclosure may include a unit implemented in hardware, software, or firmware and may be interchangeably used with the terms "logic", "logical block", "part" and "circuit". The "module" may be a minimum unit of an integrated part or may be a part thereof. The "module" may be a minimum unit for performing one or more functions or a part thereof. For example, according to an embodiment, the "module" may include an application-specific integrated circuit (ASIC).

Various embodiments of the disclosure may be implemented by software (e.g., the program 1040) including an instruction stored in a machine-readable storage medium (e.g., an internal memory 1036 or an external memory 1038) readable by a machine (e.g., the electronic device 1001). For example, the processor (e.g., the processor 1020) of a machine (e.g., the electronic device 1001) may call the instruction from the machine-readable storage medium and execute the instructions thus called. This means that the machine may perform at least one function based on the called at least one instruction. The one or more instructions may include a code generated by a compiler or executable by an interpreter. The machine-readable storage medium may be provided in the form of non-transitory storage medium. Here, the term "non-transitory", as used herein, means that the storage medium is tangible, but does not include a signal (e.g., an electromagnetic wave). The term "non-transitory" does not differentiate a case where the data is permanently stored in the storage medium from a case where the data is temporally stored in the storage medium.

According to an embodiment, the method according to various embodiments disclosed in the disclosure may be provided as a part of a computer program product. The computer program product may be traded between a seller and a buyer as a product. The computer program product may be distributed in the form of machine-readable storage medium (e.g., a compact disc read only memory (CD-ROM)) or may be directly distributed (e.g., download or upload) online through an application store (e.g., a Play Store™) or between two user devices (e.g., the smartphones). In the case of online distribution, at least a portion of the computer program product may be temporarily stored or generated in a machine-readable storage medium such as a memory of a manufacturer's server, an application store's server, or a relay server.

According to various embodiments, each component (e.g., the module or the program) of the above-described components may include one or plural entities. According to various embodiments, at least one or more components of the above components or operations may be omitted, or one or more components or operations may be added. Alternatively or additionally, some components (e.g., the module or the program) may be integrated in one component. In this case, the integrated component may perform the same or similar functions performed by each corresponding components prior to the integration. According to various embodiments, operations performed by a module, a programming, or other components may be executed sequentially, in parallel, repeatedly, or in a heuristic method, or at least some operations may be executed in different sequences, omitted, or other operations may be added.

## Claims

1. An electronic device configured to be coupled to at least one first external device to control or monitor the at least one first external device, comprising:
an input/output interface;
a communication circuit; and
a processor operatively connected to the input/output interface and the communication circuit, the processor being configured to:
obtain at least one item of information associated with the at least one first external device from the at least one first external device when the at least one first external device is coupled to the electronic device through the input/output interface or the communication circuit;
generate a user profile including the at least one item of information;
extract at least one keyword associated with the at least one first external device, from the user profile;
transmit the at least one keyword through the communication circuit to at least one second external device; and
receive at least one item of recommended content information corresponding to the at least one keyword from the at least one second external device through the communication circuit.

2. The electronic device of claim 1, wherein the obtain at least one item of information comprises
obtain at least one of model information for the at least one first external device, information about whether initial coupling to the electronic device has occurred, information about cumulative coupling time with the electronic device, and information about a cumulative coupling count with the electronic device.

3. The electronic device of claim 2, wherein the processor is further configured to:
further obtain as the at least one item of information, at least one of meta data, play time information, information about cumulative play time, and information about a cumulative play count for contents played based on coupling between the electronic device and the at least one first external device.

4. The electronic device of claim 2, wherein the processor is further configured to:
further obtain as at least part of the at least one item of information, at least one of object information included in the at least one first external device, error information of the at least one first external device, and exchange notification information of a part associated with the at least one first external device.

5. The electronic device of claim 2, wherein the processor is further configured to:
determine at least one of ranking for the cumulative coupling time, ranking for the cumulative coupling count, ranking for a cumulative play time, and ranking for a cumulative play count, with respect to the at least one first external device.

6. The electronic device of claim 5, wherein the processor is further configured to:
determine a priority for the at least one first external device in consideration of the determined at least one ranking; and
select at least one first external device included in a specified threshold ranking range based on the priority.

7. The electronic device of claim 6, wherein the processor is further configured to:
when at least one of the error information and the exchange notification information of the part is included in the generated user profile, determine that at least one first external device associated with at least one of the error information and the exchange notification information of the part, is included in the specified threshold ranking range.

8. The electronic device of claim 7, wherein the processor is further configured to:
extract the at least one keyword from at least one information corresponding to the at least one first external device selected or determined as being included in the specified threshold ranking range.

9. The electronic device of claim 1, further comprising:
a display, wherein the processor is further configured to:
output a user interface including the at least one item of recommended content information, through the display.

10. The electronic device of claim 9, wherein the processor is further configured to control the display to:
display model information of the at least one first external device selected; and
display the at least one item of recommended content information in a region of the display with corresponding model information.

11. The electronic device of claim 9, wherein the processor is further configured to:
control the display to display at least one folder corresponding to the at least one first external device ; and
cause the at least one item of recommended content information to be included in a corresponding folder.

12. The electronic device of claim 9, wherein the processor is further configured to:
control the display to enlarge and display at least one item of recommended content information in response to a user input to the at least one item of recommended content information; or
download content data corresponding to the at least one item of recommended content information from the at least one second external device.

13. The electronic device of claim 9, wherein the at least one item of recommended content information includes link information for a website providing information about a product associated with the at least one item of recommended content information, and
wherein the processor is further configured to:
in response to a user input to the at least one item of recommended content information, access the website based on the link information; and
output a screen from the website including at least one of manufacturer information of the product, seller information of the product, and price information of the product, to a first pop-up window on the display, as at least part of the product information.

14. The electronic device of claim 9, wherein the processor is further configured to:
output to the display a screen capable of setting whether to display the at least one item of recommended content information, to a second pop-up window in response to a user input to an icon included in the user interface.

15. A content recommendation method of an electronic device including a processor and configured to be coupled to at least one first external device to control or monitor the at least one first external device, the method comprising:
obtaining, using the processor, at least one item of information associated with the at least one first external device from the at least one first external device when the at least one first external device is coupled to the electronic device;
generating, using the processor, a user profile including at least part of the at least one item of information;
extracting, using the processor, at least one keyword associated with the at least one first external device from the user profile;
transmitting, using the processor, the at least one keyword to at least one second external device; and
receiving, using the processor, at least one item of recommended content information corresponding to the at least one keyword from the at least one second external device.
